# EUROPÄISCHE PATENTSCHRIFT

(11) **EP 1 051 669 B1**
(45) Veröffentlichungstag und Bekanntmachung des Hinweises auf die Patenterteilung: **12.06.2002**
(21) Anmeldenummer: 99901594.4
(22) Anmeldetag: 13.01.1999
(51) Int. Cl.: G05B 19/408

(54) **VERFAHREN UND SCHALTUNGSANORDNUNG ZUR ÜBERWACHUNG VON MASCHINENPARAMETERN**
METHOD AND CIRCUIT CONFIGURATION FOR MONITORING MACHINE PARAMETERS
PROCEDE ET CIRCUIT POUR CONTROLER DES PARAMETRES MACHINE

(30) Priorität: 24.01.1998 DE 19802728
(43) Veröffentlichungstag der Anmeldung: 15.11.2000
(73) Patentinhaber: Dr. Johannes Heidenhain GmbH, 83292 Traunreut (DE)
(72) Erfinder: KERNER, Norbert, D-83374 Traunwalchen (DE)
(86) Internationale Anmeldenummer: EP9900138
(87) Internationale Veröffentlichungsnummer: WO9938055

(56) Entgegenhaltungen:
- EP-A- 0 590 175
- WO-A-89/04578
- PATENT ABSTRACTS OF JAPAN vol. 014, no. 163 (E-0910), 29. März 1990 & JP 02 019042 A (ISHIKAWAJIMA HARIMA HEAVY IND CO LTD), 23. Januar 1990

## Beschreibung

Die vorliegende Erfindung betrifft ein Verfahren zur Überwachung von Maschinenparametern bei einer numerischen Steuerung nach dem Oberbegriff des Anspruchs 1 und eine Schaltungsanordnung zur Durchführung des Verfahrens nach dem Oberbegriff des Anspruchs 7.

Aus der EP 742 499 A2 ist ein Verfahren zum sicheren Verarbeiten von sicherheitsgerichteten Prozeßsignalen bekannt. Dabei werden Prozeßsignale unabhängig voneinander an mindestens zwei ebenfalls unabhängige Rechner geleitet, welche so mindestens zwei Überwachungskanäle bilden. In den Rechnern werden die Prozeßsignale einer separaten projektierbaren Eingangssignalverarbeitung unterzogen. Dabei erfolgt ein kreuzweiser Datenund Ergebnisvergleich. Die durch die Eingangssignalverarbeitung gebildeten Signale werden in den Überwachungskanälen interpretiert und den jeweiligen Prozeßzustand berücksichtigende Ausgangssignale werden generiert, wobei zwischen jeweils zwei Überwachungskanälen ein kreuzweiser Daten- und Ergebnisvergleich durchgeführt wird. Anschließend werden die generierten Ausgangssignale in den zwei Rechnern einer separaten projektierbaren Ausgangssignalverarbeitung unterzogen, wobei die Rechner ebenfalls einen kreuzweisen Daten- und Ergebnisvergleich durchführen. Schließlich werden mit den erhaltenen sicheren Ausgangssignalen der Überwachungskanäle sicherheitsrelevante Parameter des Prozesses redundant gesteuert.

Diese Realisierung weist den Nachteil auf, daß Prozeßsignale unabhängig voneinander ermittelt werden müssen. Werden Parameter vom Benutzer, beispielsweise in einer Initialisierungsphase, eingegeben, ist eine unabhängige Ermittlung nicht möglich.

Aus der EP 742 505 A2 ist eine Einrichtung zum sicherheitsgerichteten Überwachen einer Maschine bekannt, bei der zur redundanten prozessorgestützten Überwachung vorgebbare Daten und Daten aktueller Zustandsparameter der Überwachung getrennt eingeb-, speicher- und auslesbar sind. Zur Überwachung der Achszustände werden die ausgelesenen Daten und die Daten der entsprechenden Geber Kanalvergleichem in den beiden redundanten Kanälen zugeführt und bei fehlender Übereinstimmung der paarweisen Daten werden durch den Kanalvergleicher vorgebbare Fehlerreaktionen ausgelöst.

Dabei ist von Nachteil, daß redundante Mittel zur Eingabe, Speicherung und zum Auslesen für jeden Kanal vorgesehen sein müssen. Weiterhin müssen die zu überprüfenden Daten auch redundant für jeden Kanal separat vom Benutzer eingegeben werden.

Aus der EP 744 676 A2 ist ein Verfahren und eine Einrichtung zum sicheren Betrieb einer numerischen Steuerung für Werkzeugmaschinen oder Roboter bekannt. Um mittels zweier taktgesteuerter Prozessoren aus gleichen Eingangssignalen entsprechend vorgebbarer Umsetzbedingungen gleiche Ausgangssignale zu bilden, werden zu Beginn jeden Taktes von jedem Prozessor sein vorangegangenes Ausgangssignal und das Ausgangssignal des anderen Prozessors aus Speichermitteln ausgelesen und miteinander verglichen. Wird dabei ein Überschreiten einer vorgebbaren Abweichung erkannt, werden Fehlerreaktionen ausgelöst. Andernfalls wird ein neuer Umsetzvorgang ausgeführt und die neuen Ausgangssignale der Prozessoren in die Speichermittel geschrieben.

Dabei ist von Nachteil, daß dieses Verfahren nur für im Prozeßablauf neu ermittelte Prozeßparameter sinnvoll einzusetzen ist. Ein weiterer Nachteil ist, daß permanent die Ergebnisse des Umsetzvorgangs verglichen werden, wofür viel Prozessorleistung benötigt wird.

Aus dem technischen Fachbereich der elektronischen Datenverarbeitung ist bekannt, Cyclic-Redundency-Checks (CRC) durchzuführen. Dabei wird für eine Gruppe Daten eine Prüfsumme nach einem bestimmten Algorithmus berechnet. Stimmt für zwei Gruppen Daten die CRC-Prüfsumme überein, kann mit sehr großer Wahrscheinlichkeit davon ausgegangen werden, daß die beiden Gruppen Daten absolut identisch sind. Dies wird beispielsweise für Massenspeicher eingesetzt, indem auf Basis der zu speichernden Daten zusätzlich eine CRC-Prüfsumme berechnet und gespeichert wird. Beim Auslesen der Daten wird erneut die CRC-Prüfsumme berechnet und mit der gespeicherten CRC-Prüfsumme verglichen. Stimmen gespeicherte und berechnete CRC-Prüfsumme überein, ist aufgrund der Speicherung kein Fehler aufgetreten. Sind die CRC-Prüfsummen unterschiedlich, wird eine Fehlerbehandlung eingeleitet.

Aufgabe der vorliegenden Erfindung ist es daher, ein Verfahren anzugeben, bei dem Maschinenparameter in einer numerischen Steuerung für eine Werkzeugmaschine auf Veränderungen überwacht werden, wobei die Maschinenparameter im wesentlichen über die gesamte Lebensdauer der Maschine oder der Steuerung unverändert bleiben sollen, ohne daß deren Überwachung vollständig redundante Baugruppen erforderlich machen. Somit soll auch eine Schaltungsanordnung zur Durchführung des Verfahrens angegeben werden, die möglichst wenige zusätzliche Baugruppen speziell für die Überwachung der Maschinenparameter aufweist

Diese Aufgabe wird durch ein Verfahren mit den in Anspruch 1 und durch eine Schaltungsanordnung mit den in Anspruch 7 angegebenen Merkmalen gelöst.

Vorteilhafte Ausgestaltungen sind den jeweils abhängigen Ansprüchen zu entnehmen.

Das erfindungsgemäße Verfahren weist den Vorteil auf, daß die ohnehin benötigte zwei- oder mehrkanalige Ausgestaltung einer Steuerung ausreichend ist, um allen Kanälen der Steuerung sichere Maschinenparameter zur Verfügung zu stellen. Eine redundante Eingabe, Speicherung und ein zyklischer Vergleich jedes einzelnen Maschinenparameters ist nicht erforderlich. Dies wird dadurch erreicht, daß aufgrund der Maschinenparameter in den redundanten Kanälen unabhängige CRC-Prüfsummen berechnet werden, um einen Fehler zu ermitteln und nur diese CRC-Prüfsummen der unterschiedlichen Kanäle redundant miteinander verglichen werden.

Die erfindungsgemäße Schaltungsanordnung weist den Vorteil auf, daß bereits vorhandene Baugruppen für die Überwachung der Maschinenparameter mitbenutzt werden. Spezielle Baugruppen, die ausschließlich der Überwachung dienen, sind nicht erforderlich.

Die Erfindung wird im folgenden anhand der in der Zeichnung dargestellten Ausführungsformen näher erläutert. Es zeigt:

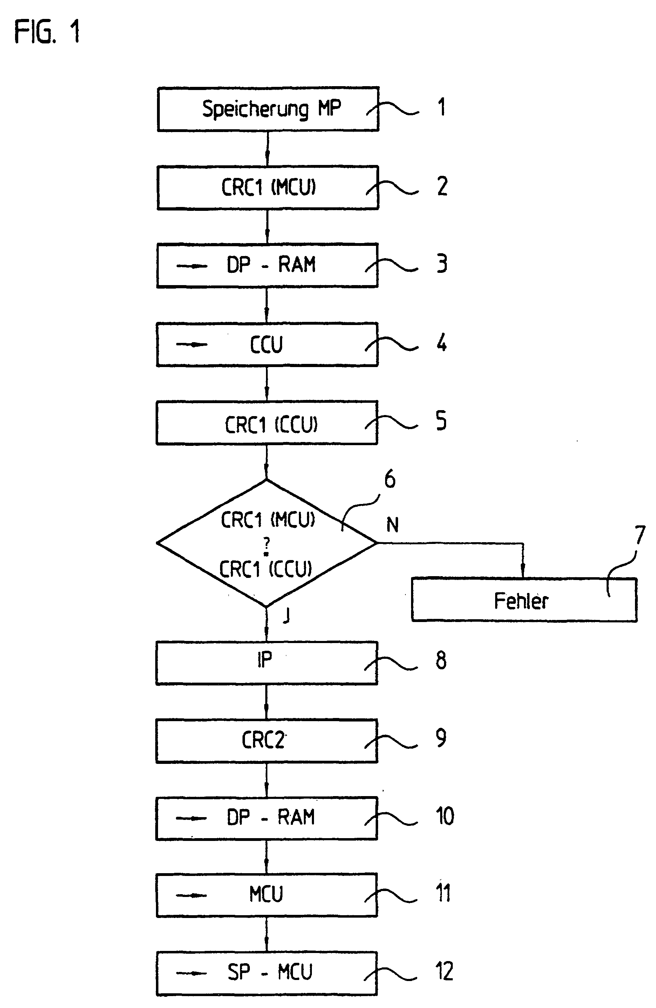

- Fig. 1:: einen möglichen Ablaufplan für das erfindungsgemäße Verfahren im Einrichtbetrieb,
- Fig. 2:: einen möglichen Ablaufplan für das erfindungsgemäße Verfahren im regulären Betrieb und
- Fig. 3:: eine mögliche Schaltungsanordnung zur Realisierung des erfindungsgemäßen Verfahrens.

Im folgenden wird davon ausgegangen, daß das erfindungsgemäße Verfahren bei einer numerischen Steuerung einer Werkzeugmaschine eingesetzt wird. Die numerische Steuerung soll dabei ein sicheres Arbeiten ermöglichen, wofür diese redundant ausgestaltet ist. Insbesondere weist die numerische Steuerung zwei Prozessoren MCU und CCU auf, die sich wechselseitig überwachen.

Um eine Anpassung zwischen numerischer Steuerung, Antriebseinheiten und Werkzeugmaschine zu ermöglichen, sind Maschinenparameter MP vorgesehen. Diese Maschinenparameter MP beinhalten Daten, die von der Steuerung benötigt werden, damit ein sinnvolles Zusammenwirken zwischen numerischer Steuerung, Antrieben und der Maschine ermöglicht wird. Hierfür beinhalten die Maschinenparameter MP beispielsweise Grenzwerte für die Endlagenüberwachung der Achsen, ohne die die numerische Steuerung nicht erkennen könnte, welches die maximal möglichen Verfahrbewegungen sind. Weiterhin können die Maschinenparameter MP auch Werte zu den Grenzgeschwindigkeiten bei offener Schutztür, Daten zur Achsgruppenzugehörigkeit und den Stoppreaktionszeiten beinhalten. Zur Speicherung von Maschinenparametern MP, die im Einrichtbetrieb einmal eingestellt werden und dann über lange Zeit unverändert bleiben sollen, ist ein permanenter Speicher SP-MCU vorgesehen. Da diese Maschinenparameter MP auch für einen sicheren Betrieb der NC-Werkzeugmaschine benötigt werden, ist es erforderlich, eine redundante Überwachung dieser Daten auf unzulässige Veränderungen durchzuführen.

In einem Einrichtbetrieb werden zunächst die durch die Antriebe oder die Maschine bedingten bzw. vom Benutzer gewünschten Maschinenparameter MP ermittelt. Diese Maschinenparameter MP werden in Verfahrensschritt 1 in einem permanenten Speicher SP-MCU, der dem ersten Prozessor MCU zugeordnet ist, gespeichert. Der permanente Speicher SP-MCU stellt dabei sicher, daß bei einem Spannungsausfall die Maschinenparameter MP nicht verloren gehen und erneut ermittelt werden müssen.

Danach wird zu den gespeicherten Maschinenparametern MP durch den ersten Prozessor MCU im Verfahrensschritt 2 eine erste CRC-Prüfsumme CRC1 berechnet. Diese erste CRC-Prüfsumme CRC1 wird sowohl im permanenten Speicher SP-MCU gespeichert, als auch zusammen mit den Maschinenparametern MP vom ersten Prozessor MCU im Verfahrensschritt 3 in einem Schreib-Lesespeicher DP-RAM gespeichert. Dieser Schreib-Lesespeicher DP-RAM ist auch einem zweiten Prozessor CCU für Schreib- und Lesezugriffe zugänglich. Dieser zweite Prozessor CCU liest die Maschinenparameter MP und die erste CRC-Prüfsumme CRC1 im Verfahrensschritt 4 aus dem Schreib-Lesespeicher DP-RAM aus. Anschließend berechnet der zweite Prozessor CCU diese erste CRC-Prüfsumme CRC1 im Verfahrensschritt 5 erneut aus den Maschinenparametern MP und vergleicht gelesene und neu berechnete erste CRC-Prüfsumme CRC1 im Verfahrensschritt 6 miteinander. Falls die beiden ersten CRC-Prüfsummen CRC1 nicht übereinstimmen, wird im Verfahrensschritt 7 ein Fehlersignal ausgegeben und eine Fehlerbehandlung durchgeführt.

Bei Übereinstimmung werden bestimmte vom zweiten Prozessor CCU benötigte Maschinenparameter MP im Verfahrensschritt 8 in interne Parameter IP umgewandelt. Dies erfolgt aufgrund von Algorithmen, die dem zweiten Prozessor CCU bekannt sind. Auf Basis dieser internen Parameter IP des zweiten Prozessors CCU, der nicht umgewandelten Maschinenparameter MP und der ersten CRC-Prüfsumme CRC1 wird vom zweiten Prozessor CCU eine zweite CRC-Prüfsumme CRC2 im Verfahrensschritt 9 berechnet. Diese zweite CRC-Prüfsumme CRC2 wird durch den zweiten Prozessor CCU im Schreib-Lesespeicher DP-RAM im Verfahrensschritt 10 gespeichert und vom ersten Prozessor MCU aus dem Schreib-Lesespeicher DP-RAM im Verfahrensschritt 11 ausgelesen. Anschließend speichert der erste Prozessor MCU die zweite CRC-Prüfsumme CRC2 im Verfahrensschritt 12 in einem nur ihm zugänglichen permanenten Speicher SP-MCU. Danach wird der Einrichtbetrieb beendet.
Somit werden im Einrichtbetrieb zwei CRC-Prüfsummen CRC1 und CRC2 im zweiten Prozessor CCU berechnet und durch den Vergleich der vom ersten Prozessor MCU übertragenen ersten CRC-Prüfsumme CRC1 mit der in dem zweiten Prozessor CCU berechneten ersten CRC-Prüfsumme CRC1 eine fehlerfreie Übertragung mittels des Schreib-Lesespeichers DP-RAM zwischen erstem Prozessor MCU und zweitem Prozessor CCU überwacht.

Sollte diese Übertragung nicht fehlerfrei gewesen sein, wird eine erneute Übertragung durch den zweiten Prozessor CCU ausgelöst. Sollten mehrere Übertragungen aufgrund unterschiedlicher erster berechneter und übertragener CRC-Prüfsummen CRC1 im zweiten Prozessor CCU als fehlerhaft erkannt werden, wird eine entsprechende Fehlermeldung an den Benutzer ausgegeben.

War die Übertragung fehlerfrei, werden anschließend im zweiten Prozessor CCU ausgewählte Maschinenparameter MP in interne Parameter IP umgerechnet. Diese internen Parameter IP werden ohnehin vom zweiten Prozessor CCU für Steuerungs- und Regelungszwecke benötigt, so daß deren Umrechnung keinen zusätzlichen Aufwand darstellt. Zu den internen Parametern IP, den nicht in interne Parameter umgerechneten Maschinenparametern MP und der ersten CRC-Prüfsumme CRC1 wird durch den zweiten Prozessor eine zweite CRC-Prüfsumme CRC2 berechnet. Durch Betrachtung der zweiten CRC-Prüfsumme CRC2 kann daher überwacht werden, ob Maschinenparameter MP, interne Parameter IP und die erste CRC-Prüfsumme CRC1 fehlerfrei sind. Die zweite CRC-Prüfsumme CRC2 wird mittels des Schreib-Lesespeichers DP-RAM an den ersten Prozessor MCU übertragen und dort für spätere Vergleiche im regulären Betrieb gespeichert.

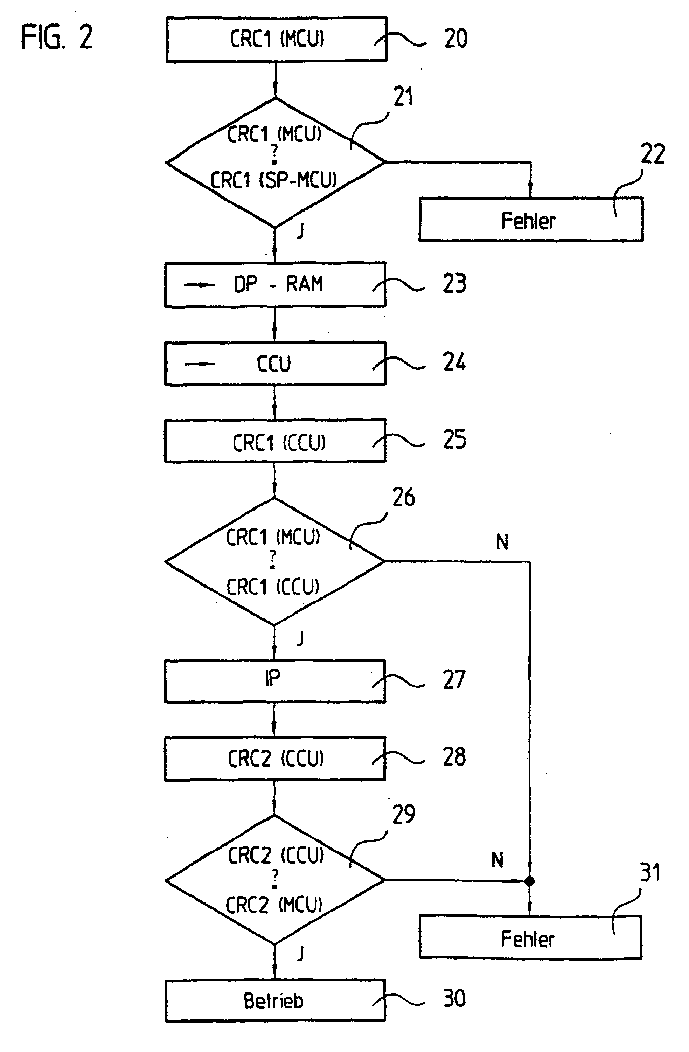

Der Verfahrensablauf im regulären Betrieb ist in Fig. 2 dargestellt. Es wird nach Einschalten der Steuerung aus den Maschinenparametern MP, die in dem dem ersten Prozessor MCU zugeordneten permanenten Speicher SP-MCU gespeichert sind, im Verfahrensschritt 20 die erste CRC-Prüfsumme CRC1 durch den ersten Prozessor MCU berechnet und diese im Verfahrensschritt 21 mit der im Speicher SP-MCU gespeicherten ersten CRC-Prüfsumme CRC1 vom ersten Prozessor MCU verglichen. Bei fehlender Übereinstimmung dieser beiden ersten CRC-Prüfsummen kann ein fehlerhaften Speicher SP-MCU erkannt und eine Fehlerbehandlung im Verfahrensschritt 22 eingeleitet werden.

Anschließend werden die Maschinenparameter MP, die erste CRC-Prüfsumme CRC1 und die zweite CRC-Prüfsumme CRC2 durch den ersten Prozessor MCU aus dem permanenten Speicher SP-MCU im Verfahrensschritt 23 ausgelesen und im Schreib-Lesespeicher DP-RAM gespeichert. Von dort werden sie im Verfahrensschritt 24 vom zweiten Prozessor CCU ausgelesen. Der zweite Prozessor CCU berechnet im Verfahrensschritt 25 aus den Maschinenparametern MP erneut die erste CRC-Prüfsumme CRC1 und vergleicht diese im Verfahrensschritt 26 mit der übertragenen ersten CRC-Prüfsumme CRC1. Dadurch wird überwacht, ob die Übertragung vom ersten Prozessor MCU an den zweiten Prozessor CCU fehlerfrei erfolgt ist. Bei Übereinstimmung dieser beiden ersten CRC-Prüfsummen CRC1 berechnet der zweite Prozessor CCU im Verfahrensschritt 27 aus bestimmten Maschinenparametern MP die internen Parameter IP, die ohnehin für den Betrieb benötigt werden. Aus internen Parametern IP, Maschinenparametern MP und der ersten CRC-Prüfsumme CRC1 wird dann im Verfahrensschritt 28 eine zweite CRC-Prüfsumme CRC2 vom zweiten Prozessor CCU berechnet und mit der vom ersten Prozessor MCU übertragenen zweiten CRC-Prüfsumme CRC2 im Verfahrensschritt 29 verglichen. Stimmen auch diese beiden zweiten CRC-Prüfsummen CRC2 überein, ist sichergestellt, daß keine Manipulation der Maschinenparameter MP und der ersten CRC-Prüfsumme CRC1 erfolgt. Dann wird die Steuerung für den weiteren Betrieb im Verfahrensschritt 30 freigegeben.

Sollte jedoch keine Übereinstimmung einer der CRC-Prüfsummen CRC1 oder CRC2 erkannt werden, wird, wie im Verfahrensschritt 22, im Verfahrensschritt 31 eine Fehlermeldung an den Benutzer ausgegeben und die Steuerung bringt die Werkzeugmaschine in einen sicheren Zustand, was in der Regel dadurch erfolgt, daß die Antriebe nicht aktiviert werden.

Im regulären Betrieb werden die CRC-Prüfsummen CRC1 und CRC2 in bestimmten Zeitabständen zyklisch überprüft. Dadurch können auch im Betrieb fehlerhafte Maschinenparameter MP erkannt und Maßnahmen zur Sichersteliung eines sicheren Betriebs durchgeführt werden.

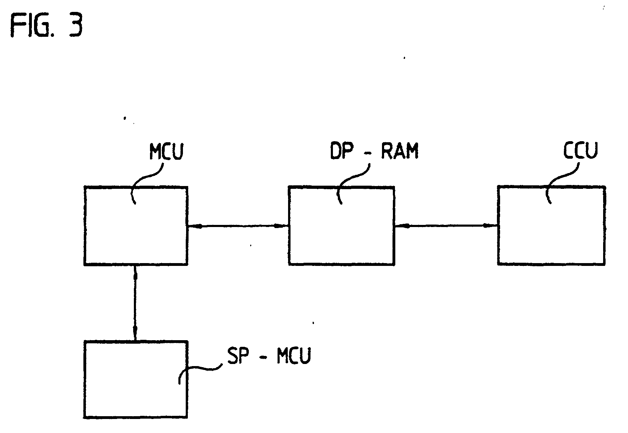

In Fig. 3 ist die erfindungsgemäße Schaltungsanordnung zur Durchführung des erfindungsgemäßen Verfahrens dargestellt. Ein erster Prozessor MCU ist über eine bidirektionale Verbindung mit einem diesem ersten Prozessor MCU zugeordneten Speicher SP-MCU verbunden. Weiterhin ist der erste Prozessor MCU über eine weitere bidirektionale Verbindung mit einem Schreib-Lesespeicher DP-RAM verbunden. Der Schreib-Lesespeicher DP-RAM ist über eine weitere bidirektionale Verbindung mit einem zweiten Prozessor CCU verbunden.

Der dem ersten Prozessor zugeordnete Speicher SP-MCU ist vorteilhaft als permanenter Speicher ausgestaltet, so daß bei Abschalten dessen Versorgungsspannung die im Speicher SP-MCU gespeicherten Daten erhalten bleiben. Dieser Speicher SP-MCU wird daher vorteilhaft durch einen ROM-, EPROM- oder EEPROM-Speicher realisiert.

Die beiden Prozessoren MCU und CCU werden vorteilhaft durch MISC-, RISC- oder digitale Signalprozessoren realisiert, je nachdem welche zusätzlichen Aufgaben der Steuerung der Werkzeugmaschine die Prozessoren durchführen.

Obwohl die Maschinenparameter MP erfindungsgemäß in beiden Prozessoren redundant überwacht werden, ist kein zusätzlicher, unabhängiger permanenter Speicher für den zweiten Prozessor CCU erforderlich. Aufgrund des erfindungsgemäßen Verfahrens ist ein permanenter Speicher SP-MCU zur Bereitstellung sicherer Maschinenparameter MP für die numerische Steuerung ausreichend.

## Patentansprüche

1. Verfahren zur Überwachung von Maschinenparametern einer numerischen Steuerung, insbesondere für eine Werkzeugmaschine, **dadurch gekennzeichnet,**
■ **daß** in einem Einrichtbetrieb für die Maschinenparameter (MP) in einem ersten Prozessor (MCU) eine erste CRC-Prüfsumme (CRC1) berechnet (2) wird, daß für zumindest einige Maschinenparameter (MP), umgewandelte Maschinenparameter (IP) und die erste CRC-Prüfsumme (CRC1) in einem zweiten Prozessor (CCU) eine zweite CRC-Prüfsumme (CRC2) berechnet (9) wird, daß die zweite CRC-Prüfsumme (CRC2) zum ersten Prozessor (MCU) übertragen (10, 11) wird und daß diese CRC-Prüfsummen (CRC1, CRC2) in einem dem ersten Prozessor (MCU) zugeordneten Speicher (SP-MCU) gespeichert (12) werden,
■ **daß** im regulären Betrieb die gespeicherten CRC-Prüfsummen (CRC1, CRC2) mit neu berechneten (20, 28) CRC-Prüfsummen (CRC1, CRC2) verglichen (21, 29) werden und daß bei mindestens einer fehlenden Übereinstimmung der Betrieb gesperrt und eine Fehlerbehandlung durchgeführt (22, 31) wird, ansonsten der Betrieb freigegeben (30) wird.

2. Verfahren nach Anspruch 1, **dadurch gekennzeichnet, daß** im Einrichtbetrieb Maschinenparameter (MP) im permanenten Speicher (SP-MCU), welcher dem ersten Prozessor (MCU) zugeordnet ist, gespeichert (1) werden, daß von dem ersten Prozessor (MCU) eine erste CRC-Prüfsumme (CRC1) aufgrund der gespeicherten Maschinenparameter(MP) berechnet (2) und im permanenten Speicher (SP-MCU) gespeichert wird, daß die Maschinenparameter (MP) und die erste CRC-Prüfsumme (CRC1) an den zweiten Prozessor (CCU) übertragen (3, 4) werden, daß durch den zweiten Prozessor (CCU) aufgrund der übertragenen Maschinenparameter (MP) die erste CRC-Prüfsumme (CRC1) erneut berechnet (5) und bei fehlender Übereinstimmung der übertragenen mit der berechneten ersten CRC-Prüfsumme (CRC1) (6) eine Fehlerbehandlung ausgelöst (7) wird, daß ansonsten aus zumindest einem Teil der Maschinenparameter (MP) interne Parameter (IP) berechnet (8) werden, daß aus zumindest einem Teil der Maschinenparameter (MP), der internen Parametern (IP) und der ersten CRC-Prüfsumme (CRC1) durch den zweiten Prozessor (CCU) eine zweite CRC-Prüfsumme (CRC2) berechnet (9) wird, daß die zweite CRC-Prüfsumme (CRC2) vom zweiten Prozessor (CCU) an den ersten Prozessor (MCU) übertragen (10, 11) und durch den ersten Prozessor (MCU) im permanenten Speicher (SP-MCU) gespeichert (12) wird.

3. Verfahren nach Anspruch 1, **dadurch gekennzeichnet, daß** im regulären Betrieb der erste Prozessor (MCU) aus den gespeicherten Maschinenparametern (MP) die erste CRC-Prüfsumme (CRC1) berechnet (20) und mit der im permanenten Speicher (SP-MCU) gespeicherten ersten CRC-Prüfsumme (CRC1) vergleicht (21), daß bei fehlerhafter Übereinstimmung eine Fehlerbehandlung ausgelöst (22) wird, daß ansonsten die zweite CRC-Prüfsumme (CRC2) aus dem permanenten Speicher (SP-MCU) ausgelesen und die Maschinenparameter (MP), die erste CRC-Prüfsumme (CRC1) und die zweite CRC-Prüfsumme (CRC2) an den zweiten Prozessor (CCU) übertragen (23, 24) werden, daß vom zweiten Prozessor (CCU) aufgrund der Maschinenparameter (MP) die erste CRC-Prüfsumme (CRC1) berechnet (25) und bei fehlender Übereinstimmung mit der übertragenen ersten CRC-Prüfsumme (CRC1) (26) eine Fehlerbehandlung ausgelöst (31) wird, ansonsten aus zumindest einem Maschinenparameter (MP) interne Parameter (IP) berechnet (27) werden, daß aufgrund der Maschinenparameter (MP), der internen Parameter (IP) und der ersten CRC-Prüfsumme (CRC1) die zweite CRC-Prüfsumme (CRC2) berechnet (28) und mit der übertragenen zweiten Prüfsumme (CRC2) verglichen (29) wird und daß bei Übereinstimmung der Betrieb der numerischen Steuerung freigegeben (30), ansonsten eine Fehlerbehandlung ausgelöst (31) wird.

4. Verfahren nach einem der Ansprüche 1 bis 3, **dadurch gekennzeichnet, daß** zur Übertragung von Daten vom ersten Prozessor (MCU) zum zweiten Prozessor (CCU). und umgekehrt die zu übertragenden Daten vom ersten Prozessor (MCU) in einen Schreib-Lesespeicher (DP-RAM) geschrieben werden und vom zweiten Prozessor (CCU) aus dem Schreib-Lesespeicher (DP-RAM) ausgelesen werden und umgekehrt.

5. Verfahren nach einem der Ansprüche 1 bis 4, **dadurch gekennzeichnet, daß** bei einer Fehlerbehandlung die fehlerhafte Funktion mindestens einmal emeut ausgeführt wird und bei mindestens einem erneuten Fehler eine Fehlermeldung ausgegeben wird.

6. Verfahren nach einem der Ansprüche 1 bis 5, **dadurch gekennzeichnet, daß** das Verfahren beim Verbinden der numerischen Steuerung mit der Versorgungsspannung und während des Betriebs der numerischen Steuerung in regelmäßigen Zeitabständen durchgeführt wird.

7. Schaltungsanordnung einer numerischen Steuerung für eine Werkzeugmaschine, bei der ein erster Prozessor (MCU) eine bidirektionale Verbindung zu einem dem ersten Prozessor (MCU) zugeordneten Speicher (SP-MCU) und zu einem Schreib-Lesespeicher (DP-RAM) aufweist und daß ein zweiter Prozessor (CCU) eine bidirektionale Verbindung zu dem Schreib-Lesespeicher (DP-RAM) aufweist, **dadurch gekennzeichnet, daß**
- in dem Speicher (SP-MCU), welcher dem ersten Prozessor (MCU) zugeordnet ist, Maschinenparameter (MP) und eine vom ersten Prozessor (MCU) berechnete erste CRC-Prüfsumme (CRC1) sowie eine vom zweiten Prozessor (CCU) berechnete zweite CRC-Prüfsumme (CRC2) gespeichert ist, und daß
- Vergleichsmittel (CCU) vorgesehen sind, welche die gespeicherten CRC-Prüfsummen (CRC1, CRC2) mit den vom ersten Prozessor (MCU) und zweiten Prozessor (CCU) neu berechneten CRC-Prüfsummen (CRC1, CRC2) vergleicht.

8. Schaltungsanordnung nach Anspruch 7, **dadurch gekennzeichnet, daß** der dem ersten Prozessor (MCU) zugeordnete Speicher (SP-MCU) als permanenter Speicher ausgestaltet ist.

## Claims

1. Method for monitoring machine parameters of a numerical control, in particular for a machine tool, **characterised in that**
· in a set-up operation for the machine parameters (MP) in a first processor (MCU), a first CRC check sum (CRC1) is calculated (2), **in that** a second CRC check sum (CRC2) is calculated (9) for at least some machine parameters (MP), converted machine parameters (IP) and the first CRC check sum (CRC1) in a second processor (CCU), **in that** the second CRC check sum (CRC2) is transmitted (10, 11) to the first processor (MCU) and **in that** these CRC check sums (CRC1, CRC2) are stored (12) in a memory (SP-MCU) which is assigned to the first processor (MCU),
· **in that**, in regular operation, the stored CRC check sums (CRC1, CRC2) are compared (21, 29) with newly calculated (20, 28) CRC check sums (CRC1, CRC2) and **in that** if at least one match is lacking, the operation is blocked and an error treatment is implemented (22, 31), and otherwise the operation is enabled (30).

2. Method according to claim 1, **characterised in that**, in the set-up operation, machine parameters (MP) are stored (1) in the permanent memory (SP-MCU) which is assigned to the first processor (MCU), **in that** a first CRC check sum (CRC1) is calculated (2) by the first processor (MCU) on the basis of the stored machine parameters (MP) and is stored in the permanent memory (SP-MCU), **in that** the machine parameters (MP) and the first CRC check sum (CRC1) are transmitted (3, 4) to the second processor (CCU), **in that** the first CRC check sum (CRC1) is re-calculated (5) by the second processor (CCU) on the basis of the transmitted machine parameters (MP) and if there is no match between the transmitted and the calculated first CRC check sum (CRC1) (6), an error treatment is triggered (7), **in that** otherwise internal parameters (IP) are calculated (8) from at least a part of the machine parameters (MP), **in that** a second CRC check sum (CRC2) is calculated (9) from at least a part of the machine parameters (MP), of the internal parameters (IP) and of the first CRC check sum (CRC1) by the second processor (CCU), **in that** the second CRC check sum (CRC2) is transmitted (10, 11) from the second processor (CCU) to the first processor (MCU) and is stored (12) by the first processor (MCU) in the permanent memory (SP-MCU).

3. Method according to claim 1, **characterised in that**, in regular operation, the first processor (MCU) calculates (20) the first CRC check sum (CRC1) from the stored machine parameters (MP) and compares (21) it with the first CRC check sum (CRC1), which is stored in the permanent memory (SP-MCU), **in that** if there is a defective match an error treatment is triggered (22), **in that** otherwise the second CRC check sum (CRC2) is read out of the permanent memory (SP-MCU), and the machine parameters (MP), the first CRC check sum (CRC1) and the second CRC check sum (CRC2) are transmitted (23, 24) to the second processor (CCU), **in that** the first CRC check sum (CRC1) is calculated (25) by the second processor (CCU) on the basis of the machine parameters (MP) and if there is no match with the transmitted first CRC check sum (CRC1) (26), an error treatment is triggered (31), otherwise internal parameters (IP) are calculated (27) from at least one machine parameter (MP), **in that**, on the basis of the machine parameters (MP), of the internal parameters (IP) and of the first CRC check sum (CRC1), the second CRC check sum (CRC2) is calculated (28) and compared (29) with the transmitted second check sum (CRC2) and **in that**, if there is a match, the operation of the numerical control is enabled (30), and otherwise an error treatment is triggered (31).

4. Method according to one of the claims 1 to 3, **characterised in that**, in order to transmit data from the first processor (MCU) to the second processor (CCU) and vice versa, the data to be transmitted are written by the first processor (MCU) into a Read-Write memory (DP-RAM) and are read out of the Read-Write memory (DP-RAM) by the second processor (CCU) and vice versa.

5. Method according to one of the claims 1 to 4, **characterised in that**, in an error treatment, the defective function is performed again at least once and, if there is at least one renewed error, an error report is issued.

6. Method according to one of the claims 1 to 5, **characterised in that** the method is implemented upon connection of the numerical control to the supply voltage and at regular intervals during operation of the numerical control.

7. Circuit configuration of a numerical control for a machine tool in which a first processor (MCU) has a bidirectional connection to a memory (SP-MCU), which is assigned to the first processor (MCU), and to a Read-Write memory (DP-RAM), and in that a second processor (CCU) has a bidirectional connection to the Read-Write memory (DP-RAM), **characterised in that**
· in the memory (SP-MCU), which is assigned to the first processor (MCU), machine parameters (MP) and a first CRC check sum (CRC1) which is calculated by the first processor (MCU) and also a second CRC check sum (CRC2) which is calculated by the second processor (CCU) is stored, and **in that**
· comparative means (CCU) are provided which compare the stored CRC check sums (CRC1, CRC2) with the CRC check sums (CRC1, CRC2) which are newly calculated by the first processor (MCU) and the second processor (CCU).

8. Circuit configuration according to claim 7, **characterised in that** the memory (SP-MCU), which is assigned to the first processor (MCU), is configured as a permanent memory.

## Revendications

1. Procédé de surveillance de paramètres machine d'une commande numérique, en particulier pour une machine-outil, **caractérisé**
• **en ce qu'**au cours d'une phase de fonctionnement de calage pour les paramètres machine (MP), on calcule (2) une première somme de contrôle CRC (CRC1) dans un premier processeur (MCU), en ce que pour au moins quelques paramètres machine (MP), des paramètres machine transformés (IP) et la première somme de contrôle CRC (CRC1), on calcule (9) une seconde somme de contrôle CRC (CRC2) dans un second processeur (CCU), en ce qu'on transmet (10, 11) la seconde somme de contrôle CRC (CRC2) au premier processeur MCU) et en ce qu'on mémorise (12) lesdites sommes de contrôle CRC (CRC1, CRC2) dans une mémoire (SP-MCU) associée au premier processeur (MCU),
• **en ce qu'**en fonctionnement régulier, on compare (21, 29) les sommes de contrôle CRC (CRC1, CRC2) mémorisées à des sommes de contrôle CRC (CRC1, CRC2) nouvellement calculées (20, 28) et en ce qu'en présence d'au moins un manque de concordance, on interrompt le fonctionnement et on procède à un traitement d'erreur (22, 31), et dans les autres cas on autorise le fonctionnement (30).

2. Procédé selon la revendication 1, **caractérisé en ce que** dans la phase de fonctionnement de calage, on mémorise (1) des paramètres machine (MP) dans la mémoire permanente (SP-MCU) qui est associée au premier processeur (MCU), **en ce que** le premier processeur (MCU) calcule (2) une première somme de contrôle CRC (CRC1) sur la base des paramètres machine (MP) mémorisés et la mémorise dans la mémoire permanente (SP-MCU), **en ce qu'**on transmet (3, 4) les paramètres machine (MP) et la première somme de contrôle CRC (CRC1) au second processeur (CCU), **en ce que** le second processeur (CCU) calcule (5) de nouveau la première somme de contrôle CRC (CRC1) sur la base des paramètres machine (MP) transmis et, en l'absence de concordance entre premières sommes de contrôle CRC (CRC1) transmise et calculée (6) un traitement d'erreur est déclenché (7), **en ce que** dans les autres cas, on calcule (8) des paramètres internes (IP) à partir d'au moins une partie des paramètres machine (PM), **en ce qu'**à partir d'au moins une partie des paramètres machine (PM), des paramètres internes (IP) et de la première somme de contrôle CRC (CRC1), le second processeur (CCU) calcule (9) une seconde somme de contrôle CRC (CRC2), **en ce que** la seconde somme de contrôle CRC (CRC2) est transmise au premier processeur (MCU) par le second processeur (CCU) et est mémorisée dans la mémoire permanente (SP-MCU) par le premier processeur (MCU).

3. Procédé selon la revendication 1, **caractérisé en ce que**, en fonctionnement régulier, le premier processeur (MCU) calcule (20) la première somme de contrôle CRC (CRC1) à partir des paramètres machines (MP) mémorisés et la compare (21) à la première somme de contrôle CRC (CRC1) mémorisée dans la mémoire permanente (SP-MCU), **en ce qu'**en cas de mauvaise concordance un traitement d'erreur est déclenché (22), en que dans les autres cas, on lit la seconde somme de contrôle CRC (CRC2) dans la mémoire permanente (SP-MCU) et on transmet (23, 24) les paramètres machine (PM), la première somme de contrôle CRC (CRC1) et la seconde somme de contrôle CRC (CRC2) au second processeur (CCU), **en ce que** le second processeur (CCU), sur la base des paramètres machine (PM), calcule (25) la première somme de contrôle CRC (CRC1) et en l'absence de concordance avec la première somme de contrôle CRC (CRC1) transmise (26) un traitement d'erreur est déclenché (31), et dans les autres cas on calcule (27) des paramètres internes (IP) à partir d'au moins un paramètre machine (MP), **en ce que** sur la base des paramètres machine (MP), des paramètres internes (IP) et de la première somme de contrôle CRC (CRC1), on calcule (28) la seconde somme de contrôle CRC (CRC2) et on la compare (29) à la seconde somme de contrôle CRC (CRC2) transmise, et **en ce qu'**en cas de concordance le fonctionnement de la commande numérique est autorisé (30), et dans le cas contraire un traitement d'erreur est déclenché (31).

4. Procédé selon une des revendications 1 à 3, **caractérisé en ce que** pour la transmission de données du premier processeur (MCU) vers le second processeur (CCU) et inversement, les données à transmettre sont inscrites par le premier processeur (MCU) dans une mémoire à lecture-écriture (DP-RAM) et sont lues par le second processeur (CCU) dans la mémoire à lecture-écriture (DP-RAM), et inversement.

5. Procédé selon une des revendications 1 à 4, **caractérisé en ce que** pour le traitement d'erreur, la fonction erronée est exécutée au moins une nouvelle fois et, en présence d'au moins une nouvelle erreur, un message d'erreur est délivré.

6. Procédé selon une des revendications 1 à 5, **caractérisé en ce que** le procédé est mis en oeuvre à la connexion de la commande numérique à la tension d'alimentation et à intervalles réguliers pendant le fonctionnement de la commande numérique.

7. Agencement de circuit de commande numérique pour une machine-outil, dans lequel un premier processeur (MCU) présente une liaison bidirectionnelle avec une mémoire (SP-MCU) associée au premier processeur (MCU) et une mémoire à lecture-écriture (DP-RAM), et dans lequel un second processeur (CCU) présente une liaison bidirectionnelle avec la mémoire à lecture-écriture (DP-RAM), **caractérisé en ce que**
• dans la mémoire (SP-MCU) associée au premier processeur (MCU) sont stockés des paramètres machine (MP) et une première somme de contrôle CRC (CRC1) calculée par le premier processeur (MCU), ainsi qu'une seconde somme de contrôle CRC (CRC2) calculée par le second processeur (CCU), et **en ce que**
• des moyens comparateurs (CCU) sont prévus, qui comparent les sommes de contrôle (CRC1, CRC2) mémorisées avec les sommes de contrôle (CRC1, CRC2) nouvellement calculées par le premier processeur (MCU) et le second processeur (CCU).

8. Agencement de circuit selon la revendication 7, **caractérisé en ce que** la mémoire (SP-MCU) associée au premier processeur (MCU) est agencée en mémoire permanente.
